**Europäisches Patentamt**

**European Patent Office**

**Office européen des brevets**

(11) Veröffentlichungsnummer : **0 069 263**
**B1**

(12) # EUROPÄISCHE PATENTSCHRIFT

(45) Veröffentlichungstag der Patentschrift :
**19.12.84**

(51) Int. Cl.³ : **G 02 B 21/14**

(21) Anmeldenummer : **82105362.6**

(22) Anmeldetag : **18.06.82**

(54) Einrichtung zur wahlweisen Realisierung von Phasenkontrast- und Reliefbeobachtung an Mikroskopen.

(30) Priorität : **07.07.81 US 281072**

(43) Veröffentlichungstag der Anmeldung :
**12.01.83 Patentblatt 83/02**

(45) Bekanntmachung des Hinweises auf die Patenterteilung : **19.12.84 Patentblatt 84/51**

(84) Benannte Vertragsstaaten :
**AT CH DE FR GB LI SE**

(56) Entgegenhaltungen :
**DE-C- 822 023**
**DE-C- 974 173**
**DE-C- 1 058 762**

(73) Patentinhaber : **Firma Carl Zeiss**
**D-7920 Heidenheim (Brenz) (DE)**

(72) Erfinder : **Piller, Horst, Dr.**
**Brucknerstrasse 45**
**D-7080 Aalen (DE)**
Erfinder : **Weber, Klaus, Dr.**
**Baumgartenweg 22**
**D-7923 Königsbronn (DE)**

## Beschreibung

Die Erfindung betrifft eine Einrichtung zur wahlweisen Realisierung von Phasenkontrast- und Reliefbeobachtung an Mikroskopen mit Hilfe von in je einer Pupillenebene im Beobachtungsstrahlengang angeordneten phasen- bzw. amplitudenändernden Schicht und einer im Beleuchtungsstrahlengang angeordneten Blende.

Derartige unter der Kurzbezeichnung « Phasenkontrast » bekannten Einrichtungen werden zur Sichtbarmachung von nichtabsorbierenden Strukturen mikroskopischer Objekte benutzt, wie z. B. Strukturen unterschiedlicher Brechzahl oder unterschiedlicher Dicke. Solche vom Auge nicht wahrnehmbaren Strukturen verschiedener optischer Dicke werden allgemein als Phasenobjekte bezeichnet.

Zu ihrer Sichtbarmachung verwendet man im Beobachtungsstrahlengang, meist direkt in der Austrittspupille des verwendeten Objektivs angeordnete, sogenannte « Phasenringe », auf die entsprechende, in konjugierten Ebenen des Beleuchtungsstrahlenganges angeordnete Blenden abgebildet werden. Indem so auf die Phase bzw. Amplitude des unterschiedlichen Beugungsordnungen zugehörigen Lichtes eingewirkt wird, blendet man bestimmte Teile der Reugungsfigur als Abbild des von den Blenden im Beleuchtungsstrahlengang begrenzten Lichquellenbildes aus.

Wie der Name Phasenring bereits andeutet sind bei den gebräuchlichen und beispielsweise in der DE-PS 63 61 68 und 97 41 73 beschriebenen Phasenkontrasteinrichtungen amplituden- bzw. phasenändernde Figuren in Form von Kreisringen auf Platten bzw. optischen Elementen des Objektivs in der Nähe seiner Pupille aufgebracht bzw. eingeätzt. Entsprechende kreisringförmige Blenden, die in der Regel direkt in der hinteren Brennebene des Kondensors angeordnet sind, werden von dem aus Kondensor und Objektiv bestehenden optischen System des Mikroskops exakt auf die Phasenringe im Objektiv abgebildet.

Darüberhinaus ist es aus der genannten DE-PS 974 173 bekannt, mehrere konzentrische Phasenringe unterschiedlichen Durchmessers zu verwenden und die den Ringen zugeordneten Ringblenden mit Hilfe einer Irisblende wahlweise in Wirkung zu bringen. Damit soll eine Anpassung der Breite des Phasenringes an Objektive mit unterschiedlichem Absorptionsverhalten erzielt werden.

Aus der DE-PS 19 63 604 ist es bekannt, für Auflichtbeleuchtung die Blende und den Phasenring als Ringsegmente auszubilden, um beide in der gleichen Ebene, in der Austrittspupille des gleichzeitig als Kondensor fungierenden Objektivs anordnen zu können. Der Schwerpunkt des von den Ringsegmenten durchgelassenen Lichtes liegt dabei auf der optischen Achse des abbildenden Objektivs.

Aus den DE-OSen 25 23 463 und 25 23 464 ist eine « Kontrastmodulationsmikroskop » genannte Einrichtung bekannt, die eine in einer Pupillenebene des Beobachtungsstrahlenganges angeordnete Platte aufweist, auf der sich streifenförmige Bereiche unterschiedlicher Transparenz befinden. Da bei diesem Mikroskop der Eingriff in das Beugungsbild nicht symmetrisch zur optischen Achse des Objektivs erfolgt, zeigen die mit diesem Mikroskop sichtbar gemachten Phasenobjekte zusätzlich einen Reliefeffekt ähnlich dem, der bei einseitig schiefer Beleuchtung eines Objektes auftritt.

Ein Nachteil des bekannten « Kontrastmodulationsmikropes » besteht darin daß die streifenförmigen Bereiche des im Beobachtungsstrahlengang angeordneten Modulators bezüglich der Drehlage sehr genau auf die entsprechenden Öffnungen der Kondensorblende abgestimmt werden müssen. Diese Blende oder der Modulator müssen also zu Justierzwecken drehbar befestigt sein. Will man die Reliefdarstellung einer Probe azimutabhängig untersuchen, so benötigt man zusätzlich einen Drehtisch, auf den die Probe aufzulegen ist.

Da die Phasenringe des eingangs genannten Kontrastierungsverfahrens bzw. der Modulator des letztgenannten Kontrastierungsverfahrens im Regelfalle in der Objektivpupille angeordnet sind, die bei sehr vielen Objektiven im nicht zugänglichen Inneren, teilweise sogar innerhalb von Linsengliedern, liegen kann, sind die beiden genannten Kontrastierungsverfahren im allgemeinen nicht miteinander kompatibel. Denn für beide Systeme müssen separate Objektivserien gefertigt werden, in denen der Phasenring bzw. der Modulator fest eingebaut ist. Dies bedeutet einen hohen Aufwand.

Es ist die Aufgabe der vorliegenden Erfindung, eine Einrichtung zur Darstellung von Phasenobjekten zu schaffen, die ohne großen Aufwand erlaubt, die betreffenden Objekte in beiden bekannten Kontrastierungsverfahren, d. h. mit und ohne Reliefeffekt darzustellen.

Diese Aufgabe wird gemäß dem Kennzeichen des Hauptanspruches dadurch gelöst, daß der Außendurchmesser eines der im Beobachtungsstrahlengang angeordneten Kreisringes im wesentlichen dem Durchmesser der entsprechenden Pupille entspricht und die diesem Ring zugeordnete Blende als lichtdurchlässiges Kreisringsegment ausgebildet ist.

Der damit erzielbare Vorteil ist darin zu sehen, daß durch einfaches Umschalten von Blenden im Beleuchtungsstrahlengang unter Verwendung des gleichen Objektivs sowohl Objektdarstellungen im klassischen (reinen) Phasenkontrast als auch nach dem sogenannten Modulationskontrastverfahren möglich sind. Daneben entfällt eine angulare Justierung zwischen Blende und Modulator.

Lagert man die als Kreisringsegment ausgebildete Blende drehbar, so kann die Reliefdarstellung des einseitig schräg beleuchteten Objektes sehr einfach azimutabhängig untersucht werden, ohne daß das Objekt selbst gedreht werden muß.

Weitere Vorteile ergeben sich aus der nachfolgenden Beschreibung der beigefügten Zeichnungen anhand derer die Erfindung näher erläutert wird:

Figur 1 zeigt einen Schnitt durch das schematisiert dargestellte Objektiv und den Kondensor eines Durchlichtmikroskops längs der optischen Achse;

Figur 2 skizziert den im Objektiv angeordneten Phasenring;

Figur 3 zeigt den Kondensor aus Fig. 1 in Aufsicht;

Figur 4 ist eine Prinzipskizze des Strahlenganges eines Auflicht-Mikroskops gemäß der Erfindung;

Figur 4a skizziert den Aufbau der Blenden im Beleuchtungsstrahlengang aus Fig. 4.

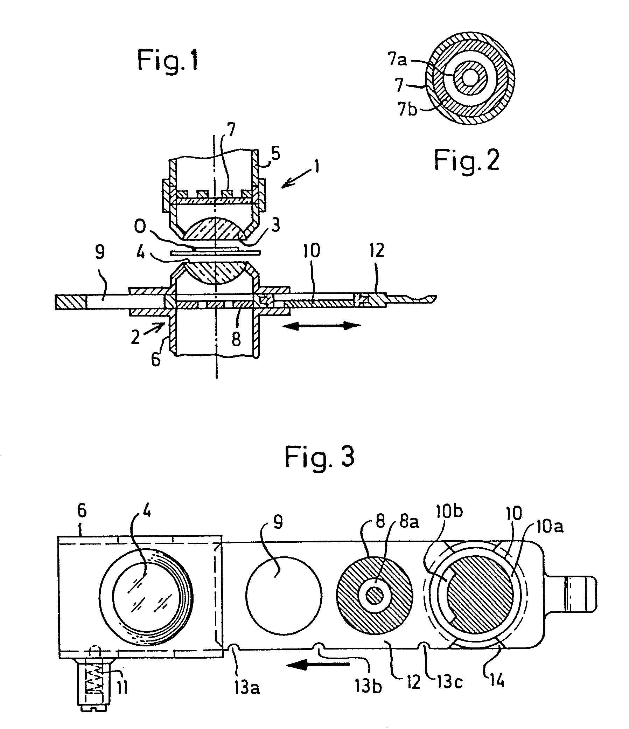

Der in Fig. 1 dargestellte Teil eines Durchlichtmikroskops besteht aus einem Objektiv 1 und einem Kondensor 2, wobei die Optik dieser Bauteile vereinfacht als in den Gehäusen 5 bzw. 6 gefaßten Einzellinsen 3 bzw. 4 dargestellt ist.

In der hinteren Brennebene des Objektivs 1 befindet sich eine nur teilweise lichtdurchlässige Platte 7, die wie Fig. 2 zeigt, zwei konzentrische ringförmige Schichten 7a bzw. 7b aus die Amplitude bzw. Phase des Lichts beeinflussendem Material trägt.

Der Kondensor 2 besitzt einen Schieber 12, der drei Schaltstellungen aufweist, in denen jeweils eine am Kondensorgehäuse 6 befestigte, federnde Raste 11 in entsprechende Vertiefungen 13a, b, c in den Schieber 12 eingreift.

Der Schieber 12 trägt drei verschiedene Blenden 8, 9 und 10. Die Blende 9 gibt die gesamte Eintrittspupille des aus Kondensor und Objektiv gebildeten optischen Systems frei und ermöglicht Hellfeldbeobachtung.

Die Blende 8 besitzt einen ringförmigen lichtdurchlässigen Bereich 8a, der von Kondensor und Objektiv auf den Phasenring 7a der Platte 7 abgebildet wird und dient zur reinen Phasenkontrastdarstellung eines zwischen den Linsen 3 und 4 befindlichen Objekts 0.

Die Blende 10 ist nur in einem ringsegmentförmigen Bereich 10b lichtdurchlässig, der auf den Ring 7b abgebildet wird. Sie ist außerdem in einem Ring 10a gefaßt, der drehbar im Schieber 12 befestigt und dem Benutzer an der Stelle der Ausnehmungen 14 im Schieber 12 zugänglich ist, sodaß der Benutzer den Ring 10a per Hand drehen kann.

Das Licht, welches durch das Segment 10b fällt, durchsetzt die Objektebene unter einen bestimmten Winkel und wird anschließend vom Ring 7b in seiner Amplitude geschwächt. Wegen des einseitig schiefen Winkels, unter dem das Licht die Objektebene durchsetzt, tritt ein Reliefeffekt auf, der das Objekt plastisch erscheinen läßt. Die Azimutabhängigkeit dieses Effektes kann durch Drehen des Ringes 10a untersucht werden.

Der Übergang von einem auf das andere Kontrastierungsverfahren erfolgt einfach durch Einschieben der entsprechenden Blenden 8 oder 10 in den Kondensor 2, ohne daß irgendwelche Eingriffe in das Objektiv 1 nötig sind.

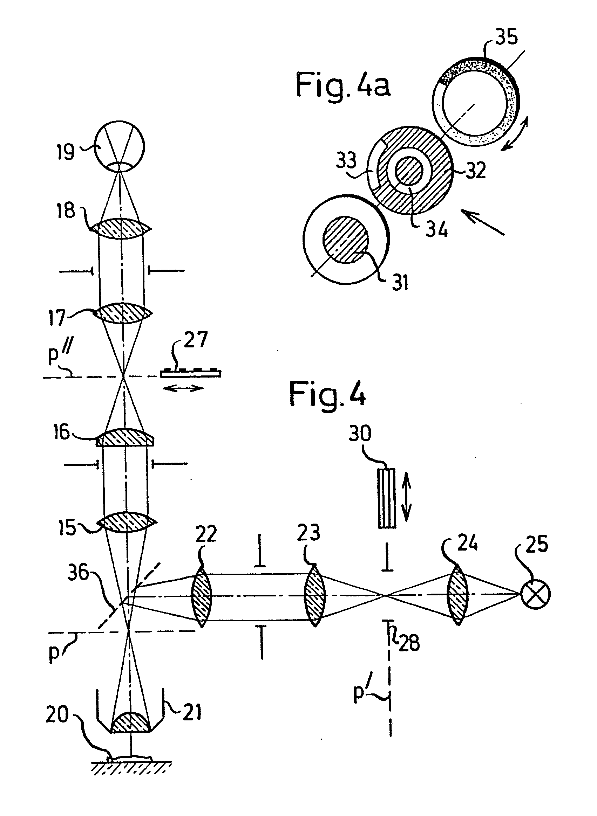

Fig. 4 zeigt eine andere Ausführungsform der Erfindung. Dargestellt ist die Prinzipskizze eines Auflichts-Strahlenganges, bei dem das Objekt 20 von einer Lichtquelle 25 über die Optik 22-24 und einen halbdurchlässigen Spiegel 36 durch das Objektiv 21 beleuchtet wird. Hier befindet sich eine in Fig. 4a näher beschriebene kombinierte Ring-Ringsegmentblende 30 in der zur Brennebene P des Objektivs 21 konjugierten Ebene P'.

Der Phasenring befindet sich in dem durch die Optik 15-18 gebildeten Beobachtungsstrahlengang in einer zweiten, ebenfalls zur Brennebene P konjugierten Ebene P'' auf einer Glasplatte 27. Die Platte 27 ist aus dem Strahlengang ausschwenkbar, um bei Hellfeldbeobachtung die Apertur und damit das Auflösungsvermögen nicht zu beeinträchtigen. Die Anordnung der phasenändernden Ringe auf der Platte 27 ist die gleiche wie in Fig. 2.

Die Blendenkombination 30 besteht, wie Fig. 4a zeigt, aus einem Träger 32, der sowohl eine Ringblende 34 als auch eine Ringsegmentblende 33 trägt. Über dem Träger 32 befindet sich drehbar ein das Ringsegment 33 überdeckender Graukeil 35, während die Ringblende 34 von einem Farbfilter 31 abgedeckt wird.

Beim Einschwenken der Filterkombination 30 sowie der Platte 27 in den Strahlengang bietet sich dem Betrachter 19 also eine Auflicht-Darstellung des Objektes 30 im konventionellen Phasenkontrast in der vom Filter 31 bestimmten Farbe (z. B. grün). Diesem Bild ist eine Reliefdarstellung des Objektes 20 aufgrund der schiefen Beleuchtung durch die Segmentblende 33 überlagert, deren Intensität sich über den Graukeil 35 bis zum völligen Ausblenden stufenlos ändern läßt.

In der in Fig. 4 dargestellten Einrichtung erfolgt eine Zwischenabbildung der Brennebene und der Ort der Zwischenabbildung ist relativ frei zugänglich. Daher ist es auch ohne weiteres möglich, neben der Platte 27 auf einem Revolver weitere Platten anzuordnen, die jeweils nur einen Ring aufweisen.

Durch Einschalten dieser Platten läßt sich dann in Verbindung mit entsprechenden Blenden im Beleuchtungsstrahlengang zusätzlich zur kombinierten Darstellung das Objekt wahlweise im reinen Phasenkontrast und reiner Reliefdarstellung beobachten, ohne daß Aperturverluste auftreten.

**Ansprüche**

1. Einrichtung zur Phasenkontrastbeobachtung mit Hilfe von in Pupillenebenen angeordneten, die Amplitude bzw. Phase des Lichts ändernden, konzentrischen, kreisringförmigen Schichten (7a, 7b) und ihnen beleuchtungsseitig zugeordneten, wahlweise in Wirkung bringbare Blenden (8, 10 ; 30), dadurch gekennzeichnet, daß zur wahlweisen Realisierung von Reliefbeobachtung eines der im Beobachtungsstrahlengang angeordneten Kreisringes (7b) im wesentlichen dem Durchmesser der entsprechenden Pupille entspricht und die diesem Ring zugeordnete Blende als lichtdurchlässiges Kreisringsegment (10b) ausgebildet ist.

2. Einrichtung nach Anspruch 1, dadurch gekennzeichnet, daß die im Beobachtungsstrahlengang angeordnete Schicht die Form zweier konzentrischer Kreisringe (7a, 7b) besitzt.

3. Einrichtung nach Anspruch 1 bis 2, dadurch gekennzeichnet, daß die als Kreisringsegment (10b) ausgebildete Blende um die optische Achse (10) drehbar gelagert ist.

4. Einrichtung nach Anspruch 1 bis 3, dadurch gekennzeichnet, daß die für den Beleuchtungsstrahlengang vorgesehenen Blenden (8, 10) auf einem in der hinteren Brennebene des Kondensors (2) angeordneten Wechsler (12) befestigt sind.

5. Einrichtung nach Anspruch 4, dadurch gekennzeichnet, daß der Revolver (12) eine zusätzliche freie Öffnung (9) für reine Hellfeldbeleuchtung enthält.

6. Einrichtung nach Anspruch 1 bis 3, dadurch gekennzeichnet, daß die Schichten (7a, 7b) bzw. Blenden (28, 30 ; 8, 10) in zwei zur hinteren Brennebene des Objektivs (21) konjugierten Ebenen (P', P'') angeordnet sind.

7. Einrichtung nach Anspruch 6, dadurch gekennzeichnet, daß eine Platte (27) in der zur Brennebene (P) des Objektivs (21) konjugierten Ebene (P'') schaltbar angeordnet ist, die die Schichten (7a, 7b) trägt.

8. Einrichtung nach Anspruch 1 bis 7, dadurch gekennzeichnet, daß sich die Kreisringblende (34) und die Kreisringsegmentblende (33) auf dem gleichen, in den Beleuchtungsstrahlengang einbringbaren Träger (32) befinden und hinter der Kreisringsegmentblende (33) ein drehbarer Graukeil (35) angeordnet ist.

9. Einrichtung nach Anspruch 5 bis 8, dadurch gekennzeichnet, daß sich hinter einer der Blenden ein Farbfilter (31) befindet.

**Claims**

1. A device for phase-constrast observation by means of concentric circular layers (7a, 7b) which are arranged in pupil planes respectively and change the amplitude and phase of light, and corresponding diaphragms (8, 10 ; 30) on the illumination side which can be brought alternately into action, characterized by the fact that for optional relief observation the outer diameter of one of the circular rings (7b) positioned in the observation-ray path corresponds essentially to the diameter of the corresponding pupil, and the diaphragm corresponding to said ring being developed as a light-transmitting circular-ring segment (10b).

2. A device according to claim 1, characterized by the fact that the layer arranged in the observation-ray path has the shape of two concentric circular rings (7a, 7b).

3. A device according to claim 1 to 2, characterized by the fact that the diaphragm which is developed as circular ring segment (10b) is mounted for rotation about the optical axis (10).

4. A device according to claim 1 to 3, characterized by the fact that the diaphragms (8, 10) which are provided for the illumination ray path are fastened on a slide (12) arranged in the rear focal plane of the condensor (2).

5. A device according to claim 4, characterized by the fact that the revolver (12) contains an additional free opening (9) for pure bright-field illumination.

6. A device according to claim 1 to 3, characterized by the fact that the layers (7a, 7b) and diaphragms (28, 30 ; 8, 10) are arranged respectively in two planes (P', P'') each of which is conjugate to the rear focal plane of the objective (21).

7. A device according to claim 6, characterized by the fact that a plate (27) which bears the layers (7a, 7b) is arranged for selectively indexible positioning in the plane (P'') which is conjugate to the focal plane (P) of the objective (21).

8. A device according to claim 1 to 7, characterized by the fact that the circular-ring diaphragm (34) and the circular-ring-segment diaphragm (33) are located on the same support (32) which can be brought into the illumination-ray path and that a rotatable gray wedge (35) is arranged behind the circular-ring-segment diaphragm (33).

9. A device according to claim 5 to 8, characterized by the fact that a color filter (31) is located behind one of the diaphragms.

**Revendications**

1. Dispositif pour l'observation en contraste de phase à l'aide de couches (7a, 7b) en forme d'anneau, concentriques, disposées dans les plans de pupille, modifiant l'amplitude ou la phase de la lumière, et de diaphragmes (8, 10 ; 30), qui leur sont attribués côté éclairage, pouvant être au choix mis en action, caractérisé en ce que, pour la réalisation au choix de l'observation en relief, le diamètre extérieur d'un anneau (7b), disposé dans le faisceau d'observation, correspond essentiellement au diamètre de la pupille correspondante, et que le diaphragme attribué à cet anneau est constitué sous la forme d'un segment annulaire (10b) transparent.

2. Dispositif selon la revendication 1, caractérisé en ce que la couche disposée dans le faisceau d'observation a la forme de deux anneaux concentriques (7a, 7b).

3. Dispositif selon l'une quelconque des revendications 1 ou 2, caractérisé en ce que le diaphragme constitué d'un segment annulaire (10b) est logé de façon à pouvoir tourner autour de l'axe optique (10).

4. Dispositif selon l'une quelconque des revendications 1 à 3, caractérisé en ce que les diaphragmes (8, 10) prévus pour le faisceau d'éclairage sont fixés sur une lame de commutation (12) disposée dans le plan focal arrière du condenseur (2).

5. Dispositif selon la revendication 4, caractérisé en ce que le révolver (12) contient une ouverture libre supplémentaire (9) pour un éclairage sur fond clair proprement dit.

6. Dispositif selon l'une quelconque des revendications 1 à 3, caractérisé en ce que les couches (7a, 7b) ou les diaphragmes (28, 30 ; 8, 10) sont disposés dans deux plans (P', P") conjugués du plan focal arrière de l'objectif (21).

7. Dispositif selon la revendication 6, caractérisé en ce qu'une plaque (27) est disposée d'une manière commutable dans le plan (P"), qui porte les couches (7a, 7b), conjugué du plan focal (P) de l'objectif (21).

8. Dispositif selon l'une quelconque des revendications 1 à 7, caractérisé en ce que le diaphragme annulaire (34) et le diaphragme en segment de cercle (33) se trouvent sur le même support (32), pouvant être inséré dans le faisceau d'éclairage, un coin gris (35), pouvant tourner, étant disposé en arrière du diaphragme en segment annulaire (33).

9. Dispositif selon l'une quelconque des revendications 5 à 8, caractérisé en ce qu'un filtre coloré (31) se trouve en arrière des diaphragmes.

Fig.1

Fig.2

Fig. 3

0 069 263

Fig. 4a

Fig. 4

2